(19) **Europäisches Patentamt / European Patent Office / Office européen des brevets**

(11) **EP 1 482 724 B1**

(12) **FASCICULE DE BREVET EUROPEEN**

(45) Date de publication et mention
de la délivrance du brevet:
**11.07.2007   Bulletin 2007/28**

(51) Int Cl.:
***H04N 1/60*** (2006.01)

(21) Numéro de dépôt: **03291155.4**

(22) Date de dépôt: **19.05.2003**

(54) **Méthode de traitement d'images numériques avec correction d'exposition par reconnaissance de zones appartenant à la peau du sujet photographié**

Bildverarbeitungsverfahren für numerische Bilder mit Belichtungskorrektur durch Erkennung von Hautbereichen des Gegenstandes

Image processing method for digital images with exposure correction by recognition of skin areas of the subject.

(84) Etats contractants désignés:
**DE FR GB IT**

(43) Date de publication de la demande:
**01.12.2004   Bulletin 2004/49**

(73) Titulaires:
* **STMicroelectronics S.A.**
  **92120 Montrouge (FR)**
* **STMicroelectronics S.r.l.**
  **20041 Agrate Brianza (Milano) (IT)**

(72) Inventeurs:
* **Messina, Giuseppe**
  **98030 Giardini Naxos (Messina) (IT)**
* **Battiato, Sebastiano**
  **95022 Acicatena (Catania) (IT)**
* **Castorina, Alfio**
  **95020 Linera (Catania) (IT)**
* **Plaza, Laurent**
  **Champs,**
  **13090 Aix en Provence (FR)**

(74) Mandataire: **Ferrari, Barbara**
**Botti & Ferrari S.r.l.,**
**Via Locatelli, 5**
**20124 Milano (IT)**

(56) Documents cités:
**EP-A- 0 502 369**          **EP-A- 1 128 660**
**US-A1- 2002 063 899**

* **KIM S-H ET AL: "FACIAL REGION DETECTION USING RANGE COLOR INFORMATION" IEICE TRANSACTIONS ON INFORMATION AND SYSTEMS, INSTITUTE OF ELECTRONICS INFORMATION AND COMM. ENG. TOKYO, JP, vol. E81-D, no. 9, 1 septembre 1998 (1998-09-01), pages 968-975, XP000782327 ISSN: 0916-8532**
* **HSU R-L ET AL: "FACE DETECTION IN COLOR IMAGES" IEEE TRANSACTIONS ON PATTERN ANALYSIS AND MACHINE INTELLIGENCE, IEEE INC. NEW YORK, US, vol. 5, no. 24, mai 2002 (2002-05), pages 696-706, XP001141193 ISSN: 0162-8828**

**Description**

<u>Domaine d'application</u>

La présente invention concerne une méthode de traitement d'images numériques.

En particulier, la méthode prévoit les phases de:

- extraction d'informations chromatiques d'une image prise par un dispositif de prise d'images et concernant un sujet humain;

- localisation de régions d'intérêt visuel;

- correction d'exposition de ladite image prise par normalisation d'une échelle de gris de ladite image prise basée sur lesdites régions d'intérêt visuel.

L'invention concerne en particulier, mais pas exclusivement, une méthode de traitement d'images de sujets humains photographiés par des dispositifs de prise d'images du type portable, en particulier de sujets rétroéclairés et la description suivante est faite par référence à ce domaine d'application dans le seul but d'en simplifier l'exposition.

<u>Art antérieure</u>

Comme l'on connaît bien, l'un des principaux problèmes qui limitent la qualité des images photographiques et qui entraînent la génération de photographies n'étant pas optimales résulte de l'exposition non correcte du sujet photographié à la lumière.

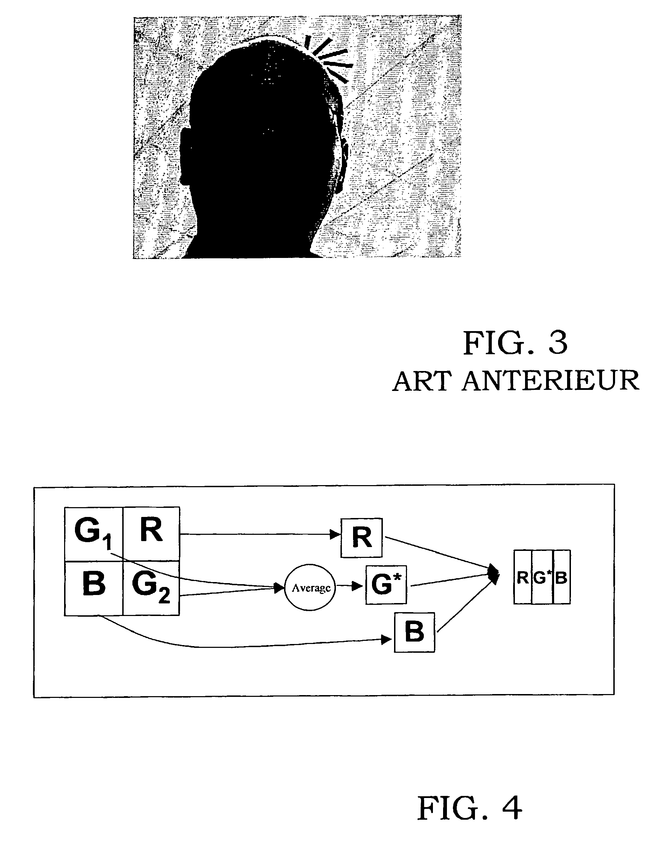

Ce problème est particulièrement ressenti dans les dispositifs portables tels que les téléphones portables, où plusieurs facteurs contribuent à obtenir des photographies étant exposées d'une façon incorrecte : la petitesse de l'appareil optique disponible, le manque d'un dispositif de flash et similaire. De plus, la nature même des dispositifs portables avec l'emploi typique des photographies qu'ils produisent, en particulier liées aux soi-disant services de messages multimédia ou MMS (acronyme de l'anglais Multimedia Messaging Service) entraînent l'acquisition de photographies du type montré à la figure 3.

Bien qu'on ne puisse pas fournir une définition précise d'une correcte exposition, car l'exposition dépend du sujet photographié et aussi bien du goût personnel de celui qui regarde la photographie, il est quand même possible de dire que, pour des sujets «normaux» (et donc ne considérant pas des cas limites, tel qu'un paysage enneigé dont la correcte acquisition entraînerait une délibérée surexposition de la photographie), une correcte exposition est obtenue quand les caractéristiques principales de l'image photographique sont rendues employant un niveau intermédiaire de gris.

Dans le domaine du traitement de l'image on connaît bien plusieurs techniques pour améliorer la qualité tonale des images photographiques, telles que l'égalisation de l'histogramme [histogram equalization], la répartition par niveaux de gris [gray-level slicing], l'augmentation du contraste [histogram stretching].

Bien que avantageuses sous nombreux aspects, ces techniques antérieures ont plusieurs inconvénients liés surtout au fait d'être indépendants du contenu visuel des images photographiées.

L'article intitulé «Automated Global Enhancement of Digitized Photographs» de Bhukhanwale et al., publié sur l'IEEE Transaction on Consumer Electronics, vol. 40, n. 1, 1994 décrit par contre un algorithme susceptible d'identifier des régions d'importance visuelle dans une image photographique, en réglant l'exposition de l'image elle-même de sorte que ces régions occupent des niveaux tonals moyens.

De plus, la demande de brevet européen n. EP 01830803.1 déposée au dom du Demandeur lui-même décrit un algorithme susceptible de même d'identifier des régions d'importance visuelle dans une image photographique pour les replacer à des niveaux tonals moyens, cet algorithme traitant directement des images du type Bayer Pattern et simplifiant les mesures statistiques employées pour localiser des régions dans l'image à haut contenu d'information, c'est-à-dire des régions d'importance visuelle.

Les algorithmes proposés dans ce document agissent directement sur l'image en format Bayer Pattern et ils comprennent les phases suivantes:

- extraction du plan vert ou canal G du Bayer Pattern: ce plan fournit une bonne approximation de la luminance Y.

- analyse visuelle: le canal G ayant été extrait, on identifie sur ce canal les régions d'intérêt visuel. Dans ce but, le plan vert est reparti en N blocs ayant la même dimension et pour chaque bloc on calcule les valeurs statistiques suivantes:

- foyer [focus]: il caractérise la netteté [sharpness] du bloc et il est utilisé pour identifier des régions où l'on trouve des composants à haute fréquence, qui correspondent à des détails de l'image photographiée.

- contraste: il est en relation avec la gamme de tons qui sont dans l'image. Plus grand est le contraste, plus grand est l'isolement des soi-disant «groupes» [cluster] de points dans le bloc, c'est-à-dire plus grand est l'impact visuel du bloc.

Pour obtenir d'importantes caractéristiques visuelles, indépendamment des conditions d'éclairage de l'image photographiée, l'analyse visuelle est effectuée sur une image à visibilité intermédiaire construite faisant une correction temporaire seulement sur la base de la valeur moyenne du canal G calculée sur le plan entier.

- réglage de l'exposition: les régions d'intérêt visuel ayant été localisées, le réglage de l'exposition est effectué utilisant les niveaux moyens de gris de ces régions en tant que valeurs de référence. Plus en détail, l'image photographiée est modifiée de sorte à amener la valeur moyenne de ces régions à une valeur cible [target] T modifiant tous les pixels appartenant au Bayer Pattern. Cette valeur cible T devrait être une valeur autour de 128 et tenir en compte une éventuelle gamme de correction effectuée après la reconstruction des couleurs du Bayer Pattern corrigé. Cela signifie que dans certains cas la valeur cible T pourrait être sensiblement inférieure à 128.

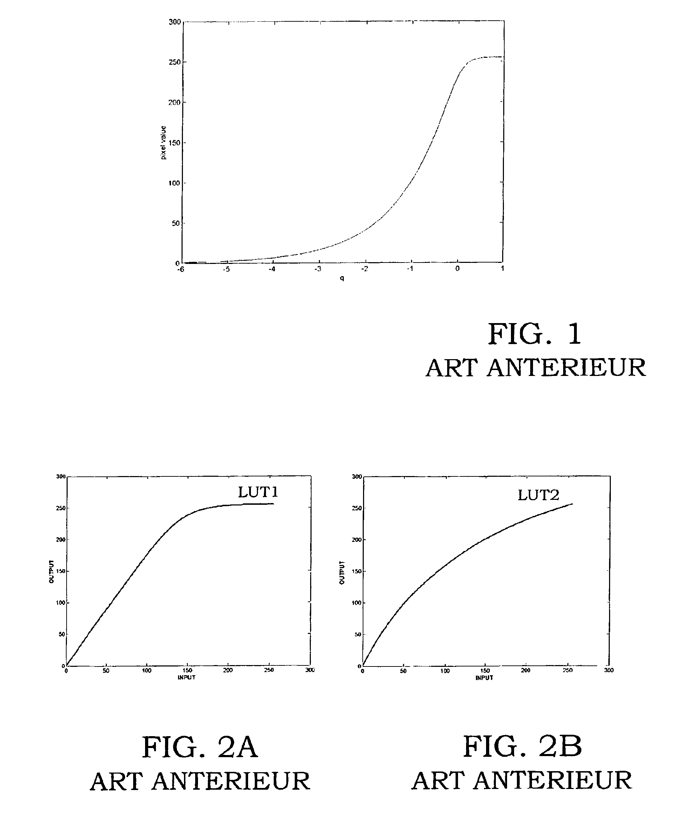

Dans ce but, on utilise une courbe de réponse simulée d'un dispositif de prise d'images numériques ou caméra, schématiquement montrée à la figure 1.
Cette courbe donne une estimation de comment les valeurs de lumière «captées» par la caméra sont transformées en valeurs de pixel, c'est-à-dire elle représente la fonction:

$$f(q) = I \tag{1}$$

Q étant la quantité de lumière et I la valeur finale de pixels.
Cette fonction (1) de réponse simulée d'une caméra peut être exprimée en forme paramétrique:

$$f(q) = \frac{255}{\left(1 + e^{-(Aq)}\right)^C} \tag{2}$$

A et C étant les paramètres de contrôle de la forme de la courbe et la valeur q étant exprimée en unités logarithmiques avec base 2 (connues aussi avec le nom de "stops"). Il est possible d'évaluer ces paramètres A et C de contrôle utilisant les renseignements contenus dans l'article de Mann et al. intitulé «Comparametric Equations with Practical Applications in Quantigraphic Image Processing», IEEE Transactions on Image Processing, Vol. 9, n. 8, 2000.
Il est aussi possible d'obtenir d'une façon expérimentale les valeurs de ces paramètres A et C ou de les fixer de sorte à réaliser un effet final particulier (par exemple une amélioration plus ou moins marquée du contraste). En particulier, la Figure 1 montre l'évolution de la courbe de réponse simulée exprimée par la formule (2) avec A=7 et C=0.13.
Utilisant cette courbe f de réponse simulée et un niveau moyen de gris avg pour les régions d'importance visuelle la distance Δ d'une situation idéale d'exposition s'exprime comme:

$$\Delta = f^{-1}(128) - f^{-1}(avg) \tag{3}$$

et la valeur de gris I(x,y) d'un pixel de position (x,y) est donc modifiée en:

$$I'(x,y) = f\left(f^{-1}(I(x,y)) + \Delta\right) \tag{4}$$

Il convient de noter que toutes les valeurs de gris des pixels sont corrigées.
En particulier, les modifications susmentionnées sont sensiblement une transformation LUT [LookUp Table] (c'est-à-dire qu'elles peuvent être mises en table pour être successivement référées) et les figures 2A et 2B montrent deux différentes transformations (les courbes LUT1 et LUT2) naissant d'une première courbe f1 de réponse simulée avec valeurs A=7 et C=0.13 et une deuxième courbe f2 de réponse simulée avec valeurs A=0.85 et C=1.

Il convient de noter que la distance ou offset du valeur 128 est respectivement de 1.24 pour f1 et 0.62 pour f2 (à partir d'une même valeur d'entrée égale a 72).

Des figures 2A et 2B il est évident que la première courbe LUT1 a une évolution plus linéaire, tandis que la deuxième courbe LUT2 a une évolution dite à gamme.

Bien que avantageuses sous plusieurs aspects, ces techniques antérieures sont peu efficaces dans le cas de dispositifs portables tels que les téléphones portables pour lesquels les images photographiques sont souvent éclairées d'arrière [backlight] et elles se concentrent principalement sur des figures humaines, quand l'usager utilise la transmission d'images pour la vidéophonie, comme illustré à la figure 3.

Un procédé pour établir les condition du traitement d'image basé sur la détection des particulières régions visuelles est décrit dans la demande de brevet européen No. 0 502 369 déposée au nom de Fuji Photo Films. Co. Ltd. En particulier, le procédé décrit prend les informations chromatiques dans ces régions, dans un exemple les visages, comme référence pour une correction d'image.

Le problème technique à la base de la présente invention est de proposer une méthode de traitement d'images ayant des caractéristiques adaptées à surmonter les limites qui affectent encore les techniques antérieures.

Résumé de l'invention

L'idée de solution sur laquelle la présente invention se base est de détecter les caractéristiques de la peau du sujet photographié dans la photographie de sorte à sélectionner et trouver d'opportunes régions d'intérêt sur la base desquelles on applique un réglage/une correction d'exposition.

Sur la base de cette idée de solution, le problème technique est résolu par une méthode de traitement d'images du type précédemment indiqué et définit dans la partie caractérisante de la revendication 1.

Les caractéristiques et les avantages de la méthode selon l'invention apparaîtront clairement de la description suivante d'une de ses formes de réalisation, donnée à titre d'exemple non limitatif avec référence aux dessins annexés.

Brève description des dessins

Dans les dessins:

- la Figure 1 montre l'évolution d'une courbe de réponse simulée d'un dispositif de prise d'images du type connu;

- les Figures 2A et 2B montrent des transformations LUT concernant des courbes différentes du type de la Figure 1;

- la Figure 3 montre une image d'un sujet rétroéclairé prise par un dispositif de prise d'images du type connu;

- la Figure 4 montre un diagramme explicatif d'une phase de la méthode de traitement d'images selon l'invention;

- les Figures 5A-5C et 7 montrent des traitements successifs d'une image pour la localisation des zones d'importance étant nécessaires dans une phase de la méthode de traitement d'images selon l'invention;

- la Figure 6 montre schématiquement la méthode selon l'invention par des traitements successifs d'une image;

- les Figures 8 et 9 montrent des images traitées obtenues par la méthode selon l'invention.

Description détaillée

La méthode de traitement d'images selon l'invention effectue une correction d'exposition d'une image photographique numérique prise par un dispositif de prise d'images sur la base d'un algorithme de reconnaissance de la peau du sujet photographié, améliorant de cette façon la qualité de l'image photographique finale, d'une façon décisive dans le cas de sujets rétroéclairés comme à la figure 3.

En particulier, la méthode selon l'invention comprend les phases suivantes:

1) une première phase d'extraction d'informations chromatiques.
Comme on a vu relativement aux méthodes de traitement d'images du type connu, la méthode selon l'invention prévoit l'extraction du canal vert G de l'image prise au cas où les images seraient en format Bayer.
Elle prévoit au contraire l'extraction du canal de luminance Y dans le cas d'images du type YCbCr obtenues d'images RGB.

2) une deuxième phase d'analyse visuelle utilisant une méthode de reconnaissance des zones correspondant à la peau du sujet photographié dans l'image photographique, qui sera mieux décrite par la suite.

On peut effectuer cette analyse sur:

1. images en format RGB;

2. images en format Bayer Pattern construisant à partir d'une image initiale une copie RGB opportunément sous-échantillonnée.

En particulier, par cette méthode de reconnaissance de la peau, on localise une pluralité de régions d'intérêt visuel correspondant à la peau du sujet photographié.

On utilise donc les informations chromatiques obtenues pendant la première phase d'extraction.

En particulier, utilisant des données du type Bayer, on peut opérer sur trois plans de couleur et sur des sous-échantillons avec dimension correspondant à un quart des données initiales, comme schématiquement illustré à la figure 4, en réduisant donc sévèrement les efforts de calcul de la méthode selon l'invention.

3) une troisième phase de réglage d'exposition de l'image photographique obtenue.

Ce réglage peut être effectué de deux façons:

1. correction de l'image en format RGB;

2. correction de l'image en format Bayer Pattern avant un algorithme successif d'interpolation des couleurs.

Dans le cas de correction d'images en format RGB, une fois les pixels d'importance visuelle localisés comme susmentionné (c'est-à-dire les pixels appartenant à la zone correspondant à la peau du sujet photographié) on utilise un algorithme de correction d'exposition du type connu, où l'on considère le niveau moyen de gris des groupes [clusters] de pixels reconnus comme appartenant à la peau du sujet photographié.

Autrement dit, les pixels appartenant à la peau du sujet sont placés au niveau moyen de l'échelle de gris de l'image et tous les pixels restants de l'image sont rangés de nouveau sur la base de ce niveau moyen.

En particulier, la valeur de la luminance ayant été corrigée selon les phases (2), (3) susmentionnées et utilisant donc les renseignements contenus dans l'article de Sakaue et al. intitulé «Adaptive Gamma Processing of the Video Cameras for the Expansion of the Dynamic range», IEEE Transaction on Consumer Electronics, Vol. 41, n. 3, août 1995, on peut, à partir d'une courbe du type représenté à la figure 1, reconstruire les valeurs chromatiques des pixels selon les formules :

$$R^{'} = 0.5 \cdot \left( \frac{Y'}{Y} \cdot (R + Y) + R - Y \right) \tag{5}$$

$$G^{'} = 0.5 \cdot \left( \frac{Y'}{Y} \cdot (G + Y) + G - Y \right) \tag{6}$$

$$B^{'} = 0.5 \cdot \left( \frac{Y'}{Y} \cdot (B + Y) + B - Y \right) \tag{7}$$

R, G, B étant les valeurs de couleur des pixels en entrée.

Dans le cas de correction d'images en format Bayer les formules (5), (6) et (7) ne peuvent pas être utilisées et le produit de sortie sera obtenu par simple application de la relation (4) à tous les pixels du modèle [pattern].

La méthode de reconnaissance des zones correspondant à la peau du sujet photographié dans l'image photographique sera maintenant décrite plus en détail.

On connaît plusieurs méthodes de reconnaissance de la couleur de la peau du sujet photographié, basées essentiellement sur l'application d'un seuil à une mesure de probabilité de couleur pour la peau.

En effet, les couleurs de la peau humaine appartiennent à une catégorie spéciale de couleurs, différente des couleurs de la plupart des objets naturels. En particulier, dans l'article de Zarti et al. intitulé «Comparison of five colour models in skin pixel classification», Proc. Of Int. Workshop on Recognition, Analysis and Tracking of Faces and Gestures in Real-Time Systems, IEEE Computer Society, Corfu, Grèce, pages 58-63, 1999, on a démontré que les couleurs de la peau humaine sont regroupés [clustered] et que les variations de peau entre chaque sujet sont dûes essentiellement à une différente intensité et elles peuvent donc être réduites utilisant la seule composante de chrominance de l'image du sujet.

De plus, dans l'article de Yang et al. intitulé «Skin-colour modeling and adaptation», Technical Report CMU-CS-97-146, School of Computer Science, Carnegie Mellon University, 1997, on a démontré que la répartition des couleurs de la peau humaine peut être représentée par une fonction gaussienne bidimensionnelle dans le plan de la chrominance. Le centre de cette répartition est déterminé par le vecteur moyenne $\vec{\mu}$ et l'amplitude de sa cloche est déterminée par la matrice de covariance $\Sigma$, ces deux valeurs étant estimées à partir d'un opportun groupe de données de test.

La probabilité conditionnelle p($\vec{x}$|s) d'un bloc de pixels d'appartenir à une classe de couleur de la peau humaine à partir de son vecteur de chrominance $\vec{x}$ est donnée donc de:

$$p(\vec{x} \mid s) = \frac{1}{2\pi} \left| \Sigma \right|^{-\frac{1}{2}} \exp\left\{ \frac{-\left[ d(\vec{x}) \right]^2}{2} \right\} \tag{8}$$

d($\vec{x}$) étant la soi-disant distance de Mahalonobis du vecteur de chrominance $\vec{x}$ du vecteur moyenne $\vec{\mu}$, définie comme:

$$\left[ d(\vec{x}) \right]^2 = (\vec{x} - \vec{\mu})' \Sigma^{-1} (\vec{x} - \vec{\mu}) \tag{9}$$

Autrement dit, la valeur de la distance de Mahalonobis d($\vec{x}$) d'un bloc de pixels avec vecteur de chrominance $\vec{x}$ détermine la probabilité que ce bloc appartienne à une classe prédéterminée de couleur de la peau humaine. Plus grande est la distance de Mahalonobis d($\vec{x}$), plus petite est la probabilité que le bloc appartienne à cette classe de couleur de la peau humaine.

Etant donné la grande quantité d'espaces de couleur, de mesures de distance et de répartitions bidimensionnelles, on peut considérer une grande variété d'algorithmes de traitement des images. De plus, les conditions d'éclairage et les modèles de couleur peuvent changer selon les modalités de prise des images.

Avantageusement selon l'invention, la méthode comprend une phase de reconnaissance de la peau du sujet photographié.

Dans une première forme de réalisation, cette phase de reconnaissance se base sensiblement sur une fonction probabiliste.

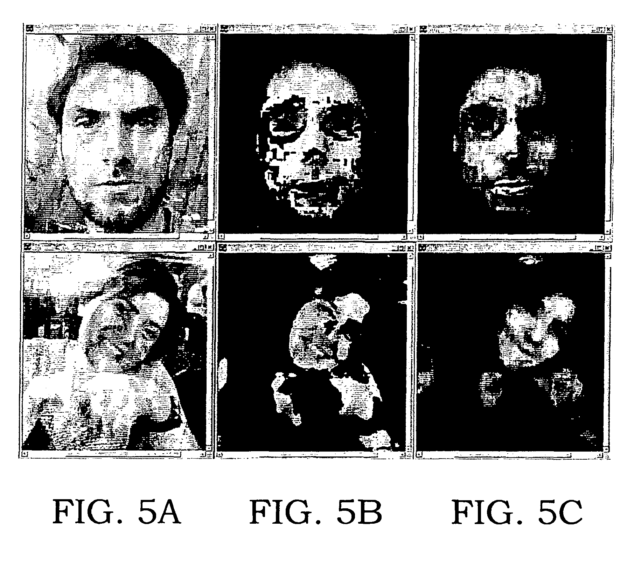

En particulier, pour chaque pixel d'une image prise en format YCrCb on prépare une répartition probabiliste pour estimer si ce pixel doit être classé comme appartenant à la peau du sujet. Sur la base de cette répartition, une nouvelle image est donc traitée avec échelle de gris normalisé, où la peau du sujet est mise en évidence comme indiqué à la figure 5 sur deux images différentes qui photographient des sujets humains.

Sur la base de cette première forme de réalisation de la phase de reconnaissance de la peau du sujet photographié, les pixels de l'image avec valeurs de gris plus élevées sont reconnus comme appartenant à la peau du sujet photographié.

Les zones localisées utilisant cette première forme de réalisation de la phase de reconnaissance de la peau du sujet photographié sur une image illustrée à la figure 5A photographiant un sujet humain sont illustrées à la figure 5C.

Dans une deuxième forme de réalisation, la phase de reconnaissance de la peau d'un sujet photographié se base sensiblement sur une simple zone de seuil et elle prévoit un traitement d'une image en format RGB pour construire un histogramme de répartition de la chrominance à partir de canaux r et g normalisés comme discuté dans l'article de Soriano et al. intitulé «Skin color modeling under varying illumination conditions using the skin locus for selecting training pixels», Real-time Image Sequence Analysis (RISA2000, Août 31-Sept.1, Finlande). En particulier, les canaux r et g normalisés sont définis comme:

$$r = R/(R+G+B) \qquad\qquad (10)$$

$$g = G/(R+G+B) \qquad\qquad (11)$$

L'histogramme bidimensionnel résultant montre la répartition de la chrominance dans l'image et on localise donc les zones ayant l'exacte répartition de chrominance de la peau humaine appliquant une simple zone de seuil. En particulier, les pixels de l'image traitée appartenant à la zone de seuil sont classés comme appartenant à la peau du sujet.

D'une façon analogue, la figure 5B montre les zones localisées utilisant cette deuxième forme de réalisation de la phase de reconnaissance de la peau du sujet photographié sur une image montrée à la figure 5A photographiant un sujet humain.

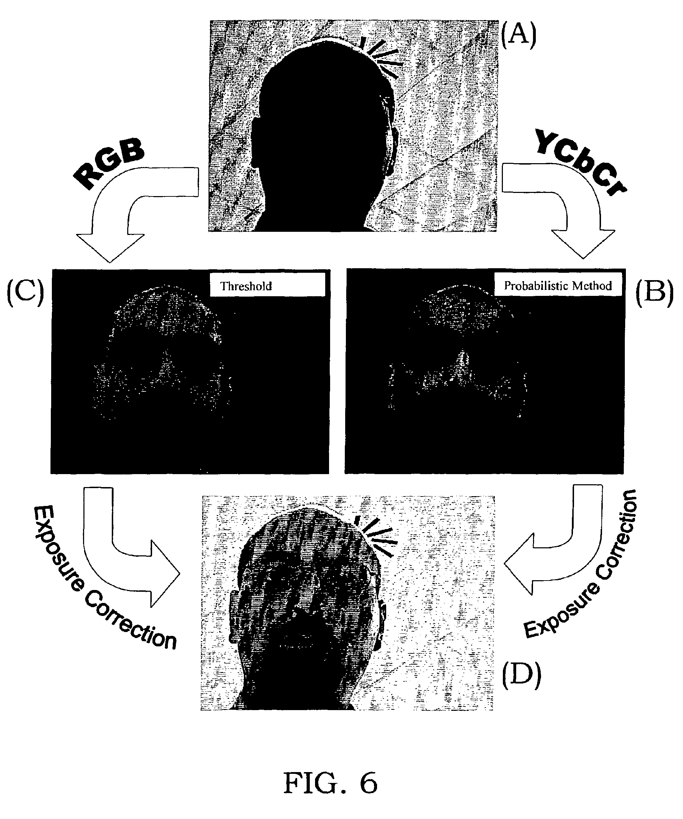

La figure 6 montre schématiquement les traitements successifs d'une image concernant un sujet humain, en particulier rétroéclairé, après les différentes phases de la méthode selon l'invention.

En particulier, sur une image prise (A) on effectue la phase de reconnaissance des zones correspondant à la peau du sujet photographié avec une méthode probabiliste (B) ou à seuil (C).

On peut donc effectuer une phase de correction d'exposition utilisant les zones localisées comme appartenant à la peau du sujet photographié pour normaliser les niveaux de gris en obtenant une image traitée finale (D), la meilleure qualité de l'image étant immédiatement évidente en la comparant avec l'image (A) de départ.

Avantageusement selon l'invention, les régions localisées dans la phase de reconnaissance comme appartenant à la peau du sujet sont utilisées comme images d'importance visuelle pour la phase suivante de réglage d'exposition de l'image photographique.

Dans une forme préférée de réalisation de la méthode de traitement des images selon l'invention, la phase de reconnaissance des zones appartenant à la peau du sujet photographié traite une image à 8 bits du type Bayer, construisant une image à couleurs de sous-échantillons avec dimension correspondant à un quart des données initiales, obtenus comme précédemment décrit et schématiquement illustré à la figure 4.

A partir de cette image à couleur de sous-échantillons, on effectue donc une phase de reconnaissance des zones appartenant à la peau du sujet photographié utilisant un histogramme de répartition de la chrominance selon la première forme de réalisation probabiliste ou les canaux r et g normalisés selon la deuxième forme de réalisation à seuil.

Cependant, dans ce deuxième cas, les canaux r et g normalisés sont définis comme:

$$r = R/(R+G^*+B) \qquad\qquad (12)$$

$$g = G'/(R+G^*+B) \qquad\qquad (13)$$

étant

$$G^*=(G1+G2)/2 \qquad\qquad (14)$$

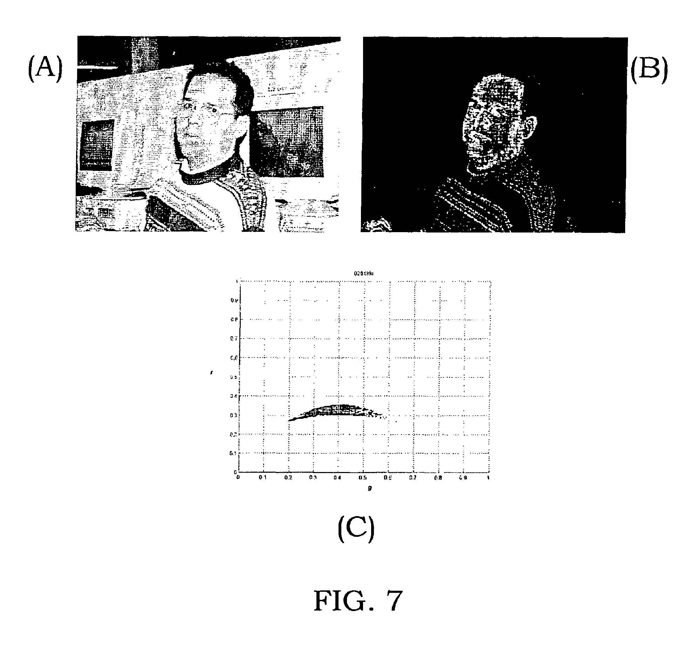

L'histogramme bidimensionnel résultant montre la répartition de chrominance de l'image traitée, donc les zones correspondant à la peau du sujet photographié, comme montré schématiquement à la figure 7, montrant en succession une image prise du type Bayer (a), l'image traitée (b) pour détecter les zones correspondant à la peau du sujet photographié et un histogramme (c) r-g de détection de ces zones.

La méthode selon l'invention comprend enfin une phase de reconstruction de la couleur de l'image prise selon les relations de (5) à (7), déjà montrées relativement à la technique antérieure, R, G, B et R', G', B' étant les valeurs de rouge, vert et bleu de l'image prise et traitée respectivement.

La séquence de phases décrite se prête à une simple modification qui permet de corriger directement sur des images en format Bayer Pattern à l'avantage d'une ultérieure simplification du point de vue du calcul. En effet, une fois construite l'image nécessaire à la détection de la peau selon le schéma de la figure 4, la valeur moyenne calculée pour les régions intéressées peut être utilisée pour effectuer directement la correction du Bayer Pattern, par exemple utilisant les modes décrits dans la demande de brevet européen n. 01830803.1 susmentionné.

Il convient pourtant de noter que les formules de reconstruction des couleurs décrites dans les équations (5), (6), (7) ne peuvent pas être utilisées dans ce cas-là et le produit de sortie du Bayer Pattern correct sera obtenu par simple application de la relation (4) à tous les pixels du modèle.

Autrement dit, la valeur de gris I(x,y) d'un pixel de position (x,y) est modifiée en :

$$I'(x,y) = f(f^{-1}(I(x,y)) + \Delta) \qquad (15)$$

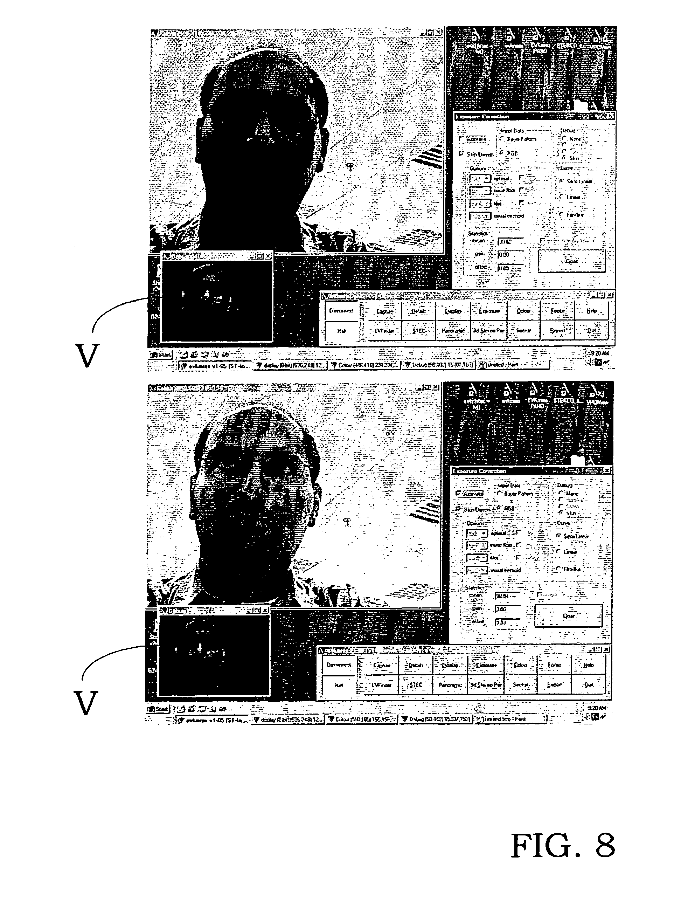

Le traitement d'une image d'un sujet rétroéclairé effectué utilisant un capteur du type CMOS-VGA et un kit d'évaluation sur plate-forme Windows© est montré à la figure 8, où dans le panneau V on a indiqué sur fond noir les zones localisées comme appartenant à la peau du sujet photographié.

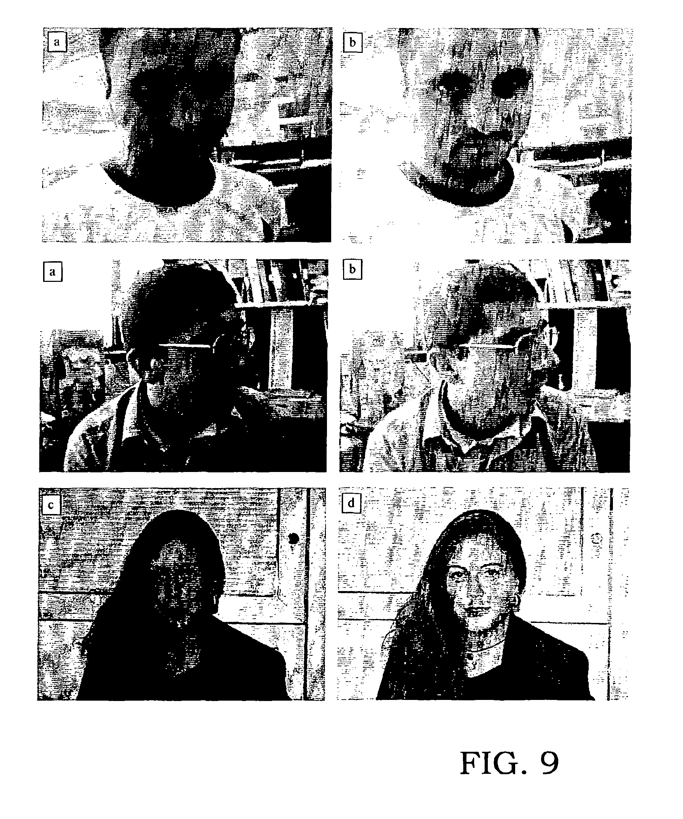

D'une façon analogue à la figure 9 on a indiqué les résultats d'une simulation de la méthode selon l'invention effectuée par la Demanderesse elle-même à partir d'images prises par un capteur VGA du type commun en format comprimé jpeg (a) et par un capteur CCD à 4,1 Mpixels d'une typique DSC (Digital Still Camera) de bande moyenne (c) et les images traitées avec la méthode selon l'invention (b) et (d) respectivement, où l'amélioration qualitative de l'image est tout à fait évidente.

**Revendications**

1.  Méthode de traitement d'images numériques comprenant les phases de:

    - extraction d'informations chromatiques d'une image prise par un dispositif de prise d'images et concernant un sujet humain, ladite image prise étant du type Bayer;
    - localisation de régions d'intérêt visuel;
    - correction d'exposition de ladite image prise par normalisation d'une échelle de gris de ladite image prise basée sur lesdites régions d'intérêt visuel,

    reconnaissance de zones correspondant à la peau du sujet photographié, lesdites zones étant utilisées comme régions d'intérêt visuel pour ladite phase de correction d'exposition
    **caractérisée en ce que** ladite correction d'exposition de ladite image prise utilise une fonction de réponse simulée du type:

$$f(q) = \frac{255}{\left(1 + e^{-(Aq)}\right)^C}$$

A et C étant des paramètres de contrôle prédéterminés et q étant une valeur de quantité de lumière exprimée en unités logarithmiques avec base 2
et un niveau moyen de gris avg calculé sur lesdites régions d'intérêt visuel, pour calculer une distance $\Delta$ d'une situation idéale d'exposition comme:

$$\Delta = f^{-1}(128) - f^{-1}(avg)$$

et pour modifier une valeur de luminance Y(x,y) d'un pixel de position (x,y) en :

$$Y'(x,y) = f(f^{-1}(Y(x,y)) + \Delta).$$

**2.** Méthode de traitement d'images numériques selon la revendication 1, **caractérisée en ce que** ladite phase de reconnaissance comprend une phase de construction d'une répartition probabiliste de ladite image prise en format YCrCb pour estimer si des pixels de ladite image doivent être classés comme appartenant auxdites zones correspondant à la peau dudit sujet photographié.

**3.** Méthode de traitement d'images numériques selon la revendication 2, **caractérisée en ce que** des pixels avec valeurs de gris plus élevées sont classés comme appartenant auxdites zones correspondant à la peau dudit sujet photographié.

**4.** Méthode de traitement d'images numériques selon la revendication 1, **caractérisée en ce que** ladite phase de reconnaissance comprend une phase d'application d'une zone de seuil de ladite image prise en format RGB pour estimer si des pixels de ladite image doivent être classés comme appartenant auxdites zones correspondant à la peau dudit sujet photographié.

**5.** Méthode de traitement d'images numériques selon la revendication 4, **caractérisée en ce que** ladite phase d'application de ladite zone de seuil comprend une phase de construction d'un histogramme de répartition de chrominance de ladite image prise.

**6.** Méthode de traitement d'images numériques selon la revendication 5, **caractérisée en ce que** ladite phase de construction dudit histogramme de répartition de chrominance utilise des canaux r et g normalisés du type :

$$r = R/(R+G+B)$$

$$g = G/(R+G+B)$$

R, G, et B étant les valeurs de rouge, vert et bleu de chaque pixel de ladite image prise du type RGB.

**7.** Méthode de traitement d'images numériques selon la revendication 5, **caractérisée en ce que** ladite phase de reconnaissance utilise ledit histogramme de répartition de chrominance pour localiser lesdites zones appartenant à la peau dudit sujet photographié formées par des pixels de ladite image prise appartenant dans ledit histogramme de répartition de chrominance à ladite zone de seuil.

**8.** Méthode de traitement d'images numériques selon la revendication 5, **caractérisée en ce que** une phase de sous-échantillonnage est prévue selon la relation:

$$G^*=(G1+G2)/2$$

et **en ce que** ladite phase de construction dudit histogramme de répartition de chrominance utilise les canaux r et g normalisés du type:

$$r = R/(R+G^*+B)$$

$$g = G'/(R+G^*+B)$$

**9.** Méthode de traitement d'images numériques selon la revendication 1, **caractérisée en ce qu'**elle comprend une phase finale de reconstruction du couleur.

**10.** Méthode de traitement d'images numériques selon la revendication 9, ladite image étant prise en format RGB, **caractérisée en ce que** ladite phase finale de reconstruction du couleur comprend les relations

$$R^{'} = 0.5 \cdot \left( \frac{Y'}{Y} \cdot (R+Y) + R - Y \right)$$

$$G^{'} = 0.5 \cdot \left( \frac{Y'}{Y} \cdot (G+Y) + G - Y \right)$$

$$B^{'} = 0.5 \cdot \left( \frac{Y'}{Y} \cdot (B+Y) + B - Y \right)$$

R, G, B et R', G', B' étant les valeurs de rouge, vert et bleu de ladite image prise et traitée respectivement.

**11.** Méthode de traitement d'images numériques selon la revendication 9, ladite image étant prise en format Bayer Pattern,
**caractérisée en ce que** ladite phase finale de reconstruction de la couleur prévoit qu'une valeur de gris I(x,y) d'un pixel de position (x,y) est modifiée en:

$$I'(x,y) = f(f^{-1}(I(x,y)) + \Delta)$$

**Claims**

**1.** A digital image processing method comprising the steps of:

- extraction of chromatic information of an image taken by means of an image taking device and related to a human subject, said taken image being of the Bayer type;
- detection of visually interesting regions;
- exposure correction of said taken image by normalising a grey scale of said taken image on the basis of said visually interesting regions,
- recognition of areas corresponding to the photographed subject skin, said areas being used as visually interesting regions for said exposure correction step.

**characterised in that** said exposure correction of said taken image uses a simulated response function of the type:

$$f(q) = \frac{255}{\left( 1 + e^{-(Aq)} \right)^{C}}$$

A and C being predetermined control parameters and q being a light quantity value expressed in 2-based logarithmic units
and a grey average level avg calculated on said visually interesting regions, in order to calculate a distance $\Delta$ of an ideal exposure situation such as:

$$\Delta = f^{-1}(128) - f^{-1}(avg)$$

and in order to change a luminance value Y(x, y) of a pixel with position (x, y) in:

$$Y'(x,y) = f(f^{-1}(Y(x,y)) + \Delta)$$

2. A digital image processing method according to claim 1, **characterised in that** said recognition step comprises a construction step of a probabilistic slicing of said image taken in the YcrCb format to evaluate if the pixels of said image must be classified as belonging to said areas corresponding to the skin of said photographed subject.

3. A digital image processing method according to claim 2, **characterised in that** pixels with higher grey values are classified as belonging to said areas corresponding to the skin of said photographed subject.

4. A digital image processing method according to claim 1, **characterised in that** said recognition step comprises an application step of a threshold area of said image taken in the RGB format to evaluate if the pixels of said image must be classified as belonging to said areas corresponding to the skin of said photographed subject.

5. A digital image processing method according to claim 4, **characterised in that** said application step of said threshold area comprises a construction step of a chrominance slicing histogram of said taken image.

6. A digital image processing method according to claim 5, **characterised in that** said construction step of said chrominance slicing histogram uses normalised channels r and g of the type:

$$r = R/(R+G+B)$$

$$g = G/(R+G+B)$$

R, G and B being the red, green and blue values of each pixel of said taken RGB image.

7. A digital image processing method according to claim 5, **characterised in that** said recognition step uses said chrominance slicing histogram to detect said areas belonging to the skin of said photographed subject formed by the pixels of said taken image belonging in said chrominance slicing histogram to said threshold area.

8. A digital image processing method according to claim 5, **characterised in that** a sub-sampling step is provided according to the relation:

$$G^* = (G1+G2)/2$$

and **in that** said construction step of said chrominance slicing histogram uses the normalised channels r and g of the type:

$$r = R/(R+G^*+B)$$

$$g = G' / (R + G^* + B)$$

**9.** A digital image processing method according to claim 1, **characterised in that** it comprises a final colour reconstruction step.

**10.** A digital image processing method according to claim 9, said image being taken in the RGB format, **characterised in that** said final colour reconstruction step comprises the relations

$$R^{'} = 0.5 \cdot \left( \frac{Y'}{Y} \cdot (R+Y) + R - Y \right)$$

$$G^{'} = 0.5 \cdot \left( \frac{Y'}{Y} \cdot (G+Y) + G - Y \right)$$

$$B^{'} = 0.5 \cdot \left( \frac{Y'}{Y} \cdot (B+Y) + B - Y \right)$$

R, G, B and R', G', B' being the red, green and blue values of said image being respectively taken and processed

**11.** A digital image processing method according to claim 9, said image being taken in the Bayer Pattern format, **characterised in that** said final colour reconstruction step provides that a grey value I(x, y) of a pixel with position (x, y) is changed in:

$$I'(x,y) = f(f^{-1}(I(x,y)) + \Delta)$$

**Patentansprüche**

**1.** Verarbeitungsverfahren für digitale Bilder umfassend die Schritte:

- Extraktion der chromatischen Informationen eines Bildes, das mittels einer Bildaufnahmevorrichtung aufgenommen wurde und sich auf einen menschliches Subjekt bezieht, wobei das aufgenommene Bild vom Bayer-Typ ist;
- Bestimmen der visuell interessanten Bereichen;
- Belichtungskorrektur des aufgenommenen Bildes durch Normalisierung eines Grauwertes (grey scale) des aufgenommenen Bildes basierend auf den visuell interessanten Bereichen,
- Auffinden von Bereichen, die der Haut des fotografierten Subjekts entsprechen, wobei diese Bereiche als visuell interessante Regionen für den Belichtungskorrekturschritt verwendet werden,

**dadurch gekennzeichnet, dass** bei der Belichtungskorrektur des aufgenommenen Bildes eine simulierte Antwortfunktion der Art eingesetzt wird:

$$f(q) = \frac{255}{(1 + e^{-(\Lambda q)})^C}$$

wobei A und C vorherbestimmte Kontrollparameter und q ein Lichtmengenwert ist, der in auf 2basierten logarithmischen Einheiten angegeben ist,
und eine mittlere Grauwerthöhe (grey average level) avg basierend auf den visuell interessanten Bereichen berechnet wird, um einen Abstand $\Delta$ von einer idealen Belichtungssituation zu berechnen wie:

$$\Delta = f^{-1}(128) - f^{-1}(avg)$$

und um den Helligkeitswert Y (x, y) eines Pixels mit der Position (x, y) in:

$$Y'(x,y) = f(f^{-1}(Y(x,y)) + \Delta)$$

zu ändern.

2. Verarbeitungsverfahren für digitale Bilder nach Anspruch 1, **dadurch gekennzeichnet, dass** der Auffindungsschritt einen Zusammensetzungsschritt eine Wahrscheinlichkeitsscheibung (probabilistic slicing) des aufgenommenen Bildes in dem YcrCb-Format umfasst, um zu evaluieren, ob die Pixel des Bildes als zu den Bereichen gehörend klassifiziert werden müssen, die der Haut des fotografierten Subjektes entsprechen.

3. Verarbeitungsverfahren für digitale Bilder nach Anspruch 2, **dadurch gekennzeichnet, dass** Pixel mit höheren Grauwerten (grey values) als zu den Bereichen die der Haut des fotografierten Subjektes entsprechen, gehörend klassifiziert werden.

4. Verarbeitungsverfahren für digitale Bilder nach Anspruch 1, **dadurch gekennzeichnet, dass** der Auffindungsschritt einen Anwendungsschritt eines Schwellenwertbereiches des aufgenommenen Bildes in dem RGB-Format umfasst, um zu evaluieren, ob die Pixel des Bildes als zu den Bereichen, die der Haut des fotografierten Subjektes entsprechen, gehörend klassifiziert werden müssen.

5. Verarbeitungsverfahren für digitale Bilder nach Anspruch 4, **dadurch gekennzeichnet, dass** der Anwendungsschritt des Schwellenwertbereiches einen Zusammensetzungsschritt eines Chrominanzscheibungshistrogramms (chrominance slicing histogram) des aufgenommenen Bildes umfasst.

6. Verarbeitungsverfahren für digital Bilder nach Anspruch 5, **dadurch gekennzeichnet, dass** der Zusammensetzungsschritt des Chrominanzscheibungshistrogramms normalisierte Kanäle r und g der Art:

$$r = R/(R+G+B)$$

$$g = G/(R+G+B)$$

umfasst, wobei R, G und B Rot-, Grün- und Blauwerte jedes Pixels des aufgenommenen RGB-Bildes sind.

7. Verarbeitungsverfahren für digitale Bilder nach Anspruch 5, **dadurch gekennzeichnet, dass** der Auffindungsschritt das Chrominanzscheibungshistogramm verwendet, um die Bereiche aufzufinden, die zu der Haut des aufgenommenen Objekts gehören, die durch die Pixel des aufgenommenen Bildes, die in dem Chrominanzscheibungshistogramm zu dem Schwellenwertbereich gehören.

8. Verarbeitungsverfahren für digitale Bilder nach Anspruch 5, **dadurch gekennzeichnet, dass** ein Unterabtastungsschritt bereitgestellt wird, gemäß der Beziehung:

$$G^* = (G1+G2)/2$$

und dass in dem Zusammensetzungsschritt des Chrominanzscheibungshistogramms die normalisierten Kanäle r und g der Art:

$$r = R/(R+G^*+B)$$

$$g = G'/(R+G^*+B)$$

eingesetzt werden.

9. Verarbeitungsverfahren für digitale Bilder nach Anspruch 1, **dadurch gekennzeichnet, dass** es einen letzten Farbwiederherstellungsschritt umfasst.

10. Verarbeitungsverfahren für digitale Bilder nach Anspruch 9, wobei das Bild im RGB-Format aufgenommen ist, **dadurch gekennzeichnet ist, dass** der letzte Farbwiederherstellungsschritt die Beziehungen umfasst

$$R' = 0{,}5 \cdot \left( \frac{Y'}{Y} \cdot (R+Y) + R - Y \right)$$

$$G' = 0{,}5 \cdot \left( \frac{Y'}{Y} \cdot (G+Y) + G - Y \right)$$

$$B' = 0{,}5 \cdot \left( \frac{Y'}{Y} \cdot (B+Y) + B - Y \right)$$

wobei R, G, B und R', G', B' Rot-, Grün- und Blauwerte entsprechend des aufgenommenen und verarbeiteten Bildes sind.

11. Verarbeitungsverfahren für digitale Bildernach Anspruch 9, wobei das Bild im Bayer-Matrixformat aufgenommen ist, **dadurch gekennzeichnet, dass** der letzte Farbwiederherstellungsschritt einen Grauwert I(x,y) eines Pixels mit einer Position (x, y) bereitstellt, der geändert ist in:

$$I'(x,y) = f\left(f^{-1}(I(x,y)) + \Delta\right)$$

FIG. 1
ART ANTERIEUR

FIG. 2A
ART ANTERIEUR

FIG. 2B
ART ANTERIEUR

FIG. 3
ART ANTERIEUR

FIG. 4

FIG. 5A          FIG. 5B          FIG. 5C

FIG. 6

(A)

(B)

(C)

FIG. 7

FIG. 8

20

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 01830803 A

- EP 0502369 A

**Littérature non-brevet citée dans la description**

- **BHUKHANWALE et al.** Automated Global Enhancement of Digitized Photographs. *l'IEEE Transaction on Consumer Electronics,* 1994, vol. 40 (1
- **MANN et al.** Comparametric Equations with Practical Applications in Quantigraphic Image Processing. *IEEE Transactions on Image Processing,* 2000, vol. 9 (8
- **SAKAUE et al.** Adaptive Gamma Processing of the Video Cameras for the Expansion of the Dynamic range. *IEEE Transaction on Consumer Electronics,* Août 1995, vol. 41 (3

- **ZARTI et al.** Comparison of five colour models in skin pixel classification. *Proc. Of Int. Workshop on Recognition, Analysis and Tracking of Faces and Gestures in Real-Time Systems, IEEE Computer Society,* 1999, 58-63
- **YANG et al.** Skin-colour modeling and adaptation. *Technical Report CMU-CS-97-146, School of Computer Science, Carnegie Mellon University,* 1997
- **SORIANO ; RISA et al.** Skin color modeling under varying illumination conditions using the skin locus for selecting training pixels. *Real-time Image Sequence Analysis,* 31 Août 2000